# EUROPEAN PATENT APPLICATION

(11) **EP 3 651 025 A1**
(43) Date of publication of application: **13.05.2020**
(21) Application number: 18204540.1
(22) Date of filing: 06.11.2018
(51) Int. Cl.: G06F 13/14

(54) **SLAVE ELECTRONIC DEVICE, MASTER ELECTRONIC DEVICE, CONTROL NETWORK AND METHOD**

(71) Applicant: Vestel Elektronik Sanayi ve Ticaret A.S., 45030 Manisa (TR)
(72) Inventor: UNAT, Osman Ertem, 45030 Manisa (TR); KOCABAS, Mehmet, 45030 Manisa (TR)
(74) Representative: Kehl, Ascherl, Liebhoff & Ettmayr Patentanwälte Partnerschaft mbB

(57) **Abstract**

The present invention provides a slave electronic device (100) comprising a user settings storage memory (102) configured to store user configurable settings (103) for the electronic device, a communication interface (101) configured to receive user configurable settings (103) from a master electronic device (210) and to store the received user configurable settings (103) in the user settings storage memory (102), and a control unit (104) that is coupled to the user settings storage memory (102) and that is configured to operate the slave electronic device (100) based on the user configurable settings (103) stored in the user settings storage memory (102). Further, the present invention comprises a respective master electronic device, a respective control network and a respective method.

## Description

### TECHNICAL FIELD

The invention relates to slave electronic device. Further, the present invention relates to a respective master electronic device, a respective control network and a respective method.

### BACKGROUND

Although applicable to any electronic device, the present invention will mainly be described in conjunction with TV sets, especially with groups of TV sets in public places.

In some places, like e.g. hotel lobbies, conference rooms, concert halls and the like, multiple TV sets may be provided for presenting a TV program or other information to spectators. Usually such TV sets should all show the same program and be provided with identical settings, e.g. regarding volume, color, brightness, and the like.

However, if multiple TV sets are provided, every one of the TV sets will have to be set individually to the required settings manually. This is a cumbersome task and requires a lot of manual work.

Accordingly, there is a need for simplifying the control of multiple electronic devices.

### SUMMARY OF THE INVENTION

The above stated problem is solved by the features of the independent claims. It is understood, that independent claims of a claim category may be formed in analogy to the dependent claims of another claim category.

Accordingly, it is provided:
Slave electronic device comprising a user settings storage memory configured to store user configurable settings for the electronic device, a communication interface configured to receive user configurable settings from a master electronic device and to store the received user configurable settings in the user settings storage memory, and a control unit that is coupled to the user settings storage memory and that is configured to operate the slave electronic device based on the user configurable settings stored in the user settings storage memory.

Further, it is provided:
A master electronic device, comprising a user settings storage memory configured to store user configurable settings for the master electronic device, a control unit that is coupled to the user settings storage memory and that is configured to operate the electronic device based on the user configurable settings stored in the user settings storage memory, a communication interface coupled to the control unit, and a user interface coupled to the control unit and configured to receive user input regarding the user configurable settings, wherein the control unit is configured to set the user configurable settings according to the user input and to transmit the set user configurable settings via the communication interface to at least one slave electronic device.

Further, it is provided:
A control network comprising at least one slave electronic device according to the present invention, and at least one master electronic device according to the present invention.

Further, it is provided:
A method for operating a plurality of electronic devices, the electronic devices comprising at least one master electronic device and at least one slave electronic device, the method comprising receiving user input regarding user configurable settings in one of the master electronic devices, setting the received user configurable settings according to the user input in the respective master electronic device, transmitting from the respective master electronic device the set user configurable settings to the slave electronic devices, and operating the slave electronic devices based on the transmitted user configurable settings.

The present invention is based on the finding that it is difficult to concurrently control a plurality of electronic devices, like e.g. TV sets, in places that are provided with more than one such electronic device, like e.g. hotels, larger rooms like a lobby, or the like.

It may be possible to remotely control such devices like TV sets, for example via network based remote controls. However, it is still necessary to control every single one of the TV sets individually via such a remote-control device.

The present invention therefore provides the slave electronic device that is capable of receiving user configurable settings via a communication interface from a master electronic device.

The master electronic device is an electronic device that is capable of transmitting user configurable settings to other devices, i.e. to the slave electronic devices. The master electronic device may e.g. receive such user configurable settings via a user interface, like e.g. a remote control or the like. The control unit in the master electronic device will then operate the master electronic device based on the received user configurable settings. At the same time will the control unit of the master electronic device also broadcast the received user configurable settings to the slave devices via the communication interface.

If user configurable settings are received at a slave electronic device via the communication interface from the master electronic device, these settings will be stored in the user settings storage memory of the respective slave electronic device. The control unit in the slave electronic device will therefore then operate the slave electronic device based on the received user configurable settings.

It is understood, that the control unit may be arranged between the user settings storage memory and the communication interface. This means that newly received user configurable settings will automatically pass through the control unit. This allows the control unit to quickly identify the user configurable settings and perform the required changes in the control of the slave electronic device. Further, with this arrangement the control unit has control over the data that is written into the user settings storage memory.

It is understood, that the master electronic device may be of the same type as the slave electronic device. If e.g. the slave electronic device is a TV set, the master electronic device may also be a TV set. Further, a single electronic device may comprise the features of the slave electronic device and the features of the master electronic device. A user may e.g. be provided with the option to select if an electronic device is a master electronic device or a slave electronic device. It is also possible that an electronic device is a master electronic device and a slave electronic device at the same time. Such a device will broadcast any locally received user configurable settings and will at the same time accept user configurable settings via its communication interface. Generally, in the context of the present invention a master electronic device may be any device that actively transmits user configurable settings. In contrast, a slave electronic device may be any device that receives and processes such user configurable settings.

If a plurality of slave electronic devices is provided and are coupled to each other via a network, user configurable settings may be spread between all the slave electronic devices via the network and all slave electronic devices may operate based on the same user configurable settings provided by a master electronic device.

Therefore, with the present invention it becomes easily possible to configure a plurality of slave electronic devices to use the same user configurable settings without the need to individually configure each one of the slave electronic devices.

Further embodiments of the present invention are subject of the further subclaims and of the following description, referring to the drawings.

In an embodiment, the control unit of the master electronic device may be configured to transmit via the communication interface search requests for slave electronic devices that are capable of receiving user configurable settings via their communication interface and to receive respective answer messages from the respective slave electronic devices.

In a further embodiment, the control unit of the slave electronic device may be configured to receive via the communication interface search requests for slave electronic devices that are capable of receiving user configurable settings via their communication interface and to positively answer such received search requests.

In another embodiment, the method may comprise transmitting from one of the master electronic devices search requests for slave electronic devices that are capable of receiving user configurable settings, and positively answering such received search requests from the slave electronic devices.

A search request may e.g. be broadcast by the master electronic device via a network broadcast message. If for example the communication interface is an Ethernet interface, the broadcast message may be an IPv4 broadcast message to the broadcast address of the respective network or an IPv6 multicast message.

The search request may also be broadcast e.g. as individual messages to every node on a network. The master electronic device may e.g. perform a kind of IP-scan, i.e. send a search request to every possible address in the respective network address range. If an address, e.g. a specific IPv4 address, pertains to a slave electronic device, this slave electronic device may answer the search request. It is understood, that specific ports may be predetermined for the search requests.

It is understood, that the grouping of the slave and master electronic devices may also be performed vice versa. In this case, the master electronic device will not actively initiate a search but will wait for application requests from slave electronic devices. The slave electronic devices may use the same scheme to identify the master electronic device as explained above for the master electronic device identifying the slave electronic devices.

Further, prior to selecting the electronic devices to group in a single device group, the user may be provided with a list of identified devices (master electronic devices, slave electronic devices, master/slave electronic devices or all types of electronic devices) and may select the devices to add to a group.

As alternative, the master electronic device may comprise a user interface that allows the user to input network addresses of the slave electronic devices. In addition or as further alternative, the slave electronic devices may comprise a user interface that allows the user to input network addresses of the master electronic device.

It is understood, that in case that the single electronic devices comprise the features of the slave and the master electronic devices, the grouping may be performed in any of the above-mentioned ways. After grouping any of the group members may then send or receive user configurable settings.

In a further embodiment, the control unit of the master electronic device may be configured to provide user configurable settings transmitted via the communication interface with a predetermined group ID.

In another embodiment, the control unit of the slave electronic device may be configured to analyze user configurable settings received via the communication interface for the presence of a predetermined group ID and to only store and operate the slave electronic device based on the received user configurable settings if the group ID is present in the received user configurable settings.

In a further embodiment, the method may comprise providing from one of the master electronic devices user configurable settings transmitted via the communication interface with a predetermined group ID, and analyzing in the slave electronic devices user configurable settings received via the communication interface for the presence of a predetermined group ID and only storing and operating the slave electronic devices based on the received user configurable settings if the group ID is present in the received user configurable settings.

As explained above, master electronic devices and slave electronic devices may identify compatible devices on a network. However, it is possible that multiple groups of electronic devices reside on the same network, e.g. groups of electronic devices in different rooms of the same building.

With the group ID it is therefore possible to separate such electronic devices into different groups. The master devices of a group will then only transmit user configurable settings comprising the respective group ID. At the same time, the slave electronic devices of the respective group will only listen to user configurable settings with the respective group ID.

It is understood, that the slave and/or master electronic devices grouped in a single group may be provided with a group ID and may only listen to user configurable settings with the respective group ID.

Such a group ID may e.g. be automatically generated at the time of creating the respective group, especially, if a user may interfere with the grouping process and select the single electronic devices pertaining to a group, as indicated above.

As alternative, the single electronic devices may provide the user with a user interface that allows inputting the group ID prior to performing the search for other electronic devices. This means that for example two electronic devices may be provided with the group ID 1 in a first step. These two first electronic devices may form the group with group ID 1. A third and further electronic devices may then e.g. be added to the group by providing the respective further electronic devices with the group ID "1". These electronic devices will then be added to the group. To this end, the electronic devices may e.g. include the group ID in the search messages.

It is understood, that regarding the grouping of electronic devices, the master electronic devices and the slave electronic devices and the master/slave electronic devices may all comprise the same capabilities. Therefore, if above or below an "electronic device" is mentioned in this regard, the respective explanations may refer to any of the three types of devices.

In another embodiment, the master electronic device may comprise a TV set and/or an audio player, like e.g. a wireless or smart speaker, an audio receiver or the like, and wherein the communication interface comprises an Ethernet interface and/or a WIFI interface. In addition or as alternative, the slave electronic device may comprise a TV set and/or an audio player, like e.g. a wireless or smart speaker, an audio receiver or the like, and wherein the communication interface comprises an Ethernet interface and/or a WIFI interface.

It is understood, that different types of electronic devices may exchange user configurable settings via the communication interfaces. In such a case, the respective electronic devices will only process user configurable settings that may be applied in the respective electronic devices.

For example, a group of electronic devices may comprise TV sets, wireless speakers and audio receivers with speakers connected to them. In such a group a TV set may broadcast user configurable settings regarding volume, bass, balance, fader and the like that refer to the audio reproduction in the respective device. The TV set may however also broadcast user configurable settings that refer to the image, like e.g. brightness, color saturation and the like.

In such a case, the electronic devices in the group will only process the user configurable settings that they may apply internally. This means that devices like speakers or audio receivers will only process sound related user configurable settings and only those sound related user configurable settings that may be applied to the respective electronic device. A mono speaker may e.g. ignore fader and balance settings.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a slave electronic device according to the present invention;
Fig. 2 shows a block diagram of an embodiment of a master electronic device according to the present invention;
Fig. 3 shows a block diagram of an embodiment of a control network according to the present invention;
Fig. 4 shows a flow diagram of an embodiment of a method according to the present invention;
Fig. 5 shows a flow diagram of another embodiment of a method according to the present invention.

In the figures like reference signs denote like elements unless stated otherwise.

### DETAILED DESCRIPTION OF THE DRAWINGS

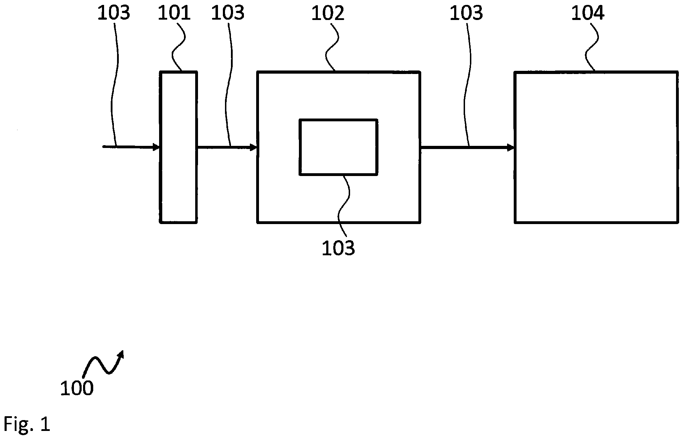

Fig. 1 shows a slave electronic device 100. The slave electronic device 100 comprises a user settings storage memory 102 that is coupled to a communication interface 101 and to a control unit 104.

The user settings storage memory 102 stores user configurable settings 103 for the slave electronic device 100. The control unit 104 is configured to operate the slave electronic device 100 based on the user configurable settings 103 stored in the user settings storage memory 102. The control unit 104 may therefore e.g. set a volume of the slave electronic device 100 as instructed by the respective user configurable settings 103 in the user settings storage memory 102.

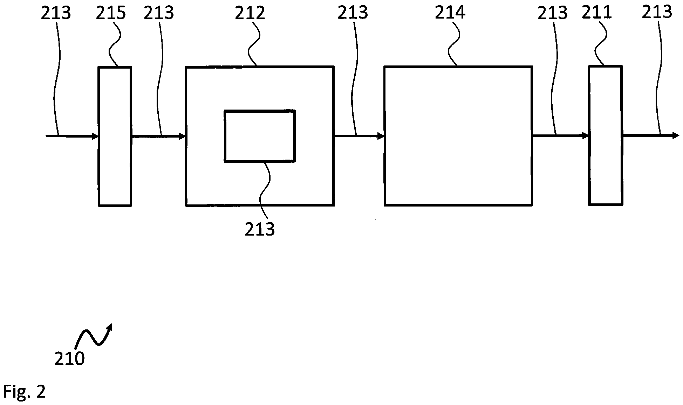

Further, the communication interface 101 may receive user configurable settings 103 from a master electronic device (see Fig. 2) and may store the received user configurable settings 103 in the user settings storage memory 102. Therefore, an update or modification of the user configurable settings 103 is performed. The control unit 104 will then operate the slave electronic device 100 based on the updated user configurable settings 103.

It is understood, that the shown arrangement is just an exemplary arrangement. For example, the control unit 104 may be provided between the user settings storage memory 102 and the communication interface 101, or the communication interface 101 may be integrated in the control unit 104.

To allow including the slave electronic device 100 in a group of devices, the control unit 104 may receive search requests for slave electronic devices 100 that are capable of receiving and processing user configurable settings 103 via the communication interface 101. If such a request is received, the control unit 104 may positively answer the received search request.

Further, in order to facility managing multiple groups of electronic devices on a network, the control unit 104 may analyze user configurable settings 103 received via the communication interface 101 for the presence of a predetermined group ID. The control unit 104 may then only store and operate the slave electronic device 100 based on the received user configurable settings 103 if the group ID is present in the received user configurable settings 103.

It is understood, that the slave electronic device 100 may for example comprise a TV set, wireless speakers, or any other type of audio player or the like. Further, the communication interface 101 may comprise an Ethernet interface and/or a WIFI interface.

Fig. 2 shows a master electronic device 210. The master electronic device 210 comprises a user settings storage memory 212 that is coupled to a control unit 214 and to a user interface 215. The control unit 214 is further coupled to a communication interface 211.

The user settings storage memory 212 stores user configurable settings 213 for the master electronic device 210, such as e.g. volume or other sound settings, and video settings, like e.g. brightness, color saturation and the like.

During normal operation, the control unit 214 operates the master electronic device 210 based on the user configurable settings 213 stored in the user settings storage memory 212. Further, a user may update the user configurable settings 213 via the user interface 215 that receives user input regarding the user configurable settings 213. The user interface 215 may e.g. comprise an infrared interface that may receive commands from a remote control.

If a user updates the user configurable settings 213, the control unit 214 sets the user configurable settings 213 according to the user input and transmits the updated user configurable settings 213 via the communication interface 211 to at least one slave electronic device (see Fig. 1). In the slave electronic device, the updated user configurable settings 213 will then be used to operate the slave electronic device.

In order to group devices for common control, the control unit 214 may transmit via the communication interface 211 search requests for slave electronic devices 100 that are capable of receiving user configurable settings 213 via their communication interface 211 and may receive the respective answer messages from the respective slave electronic devices 100. After receiving the answer messages, the control unit 214 will add the respective slave electronic device to the group. If multiple groups are to be managed on the same network, the control unit 214 may provide user configurable settings 213 transmitted via the communication interface 211 with a predetermined group ID.

It is understood, that the master electronic device 210 may for example comprise a TV set, wireless speakers, or any other type of audio player or the like. Further, the communication interface 211 may comprise an Ethernet interface and/or a WIFI interface.

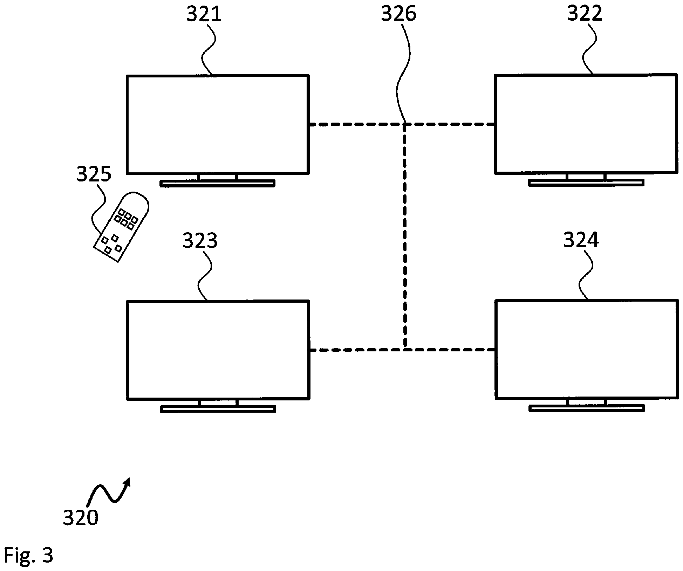

Fig. 3 shows a control network 320. The control network 320 comprises four TV sets 321, 322, 323, 324 that are communicatively coupled to each other via a data network 326. A remote control 325 is shown near TV set 321. It is understood, that in the control network 320 any one of TV sets 321, 322, 323, 324 may perform the function of a master or a slave electronic device at any time. This means that the TV sets 321, 322, 323, 324 may each comprise the features of the slave electronic device and the master electronic device as explained above.

If in the shown control network 320 a user uses the remote control 325 to control e.g. the volume of the TV set 321, the control unit in TV set 321 will change the volume in the TV set 321 accordingly. Further, the control unit of TV set 321 will also broadcast a message containing the respective volume setting to the other TV sets 322, 323, 324. There, the control units of the other TV sets 322, 323, 324 will then perform the same volume setting.

It is understood, that other settings, like e.g. channel settings, other sound settings, image settings, and the like may also be exchanged between the TV sets 321, 322, 323, 324.

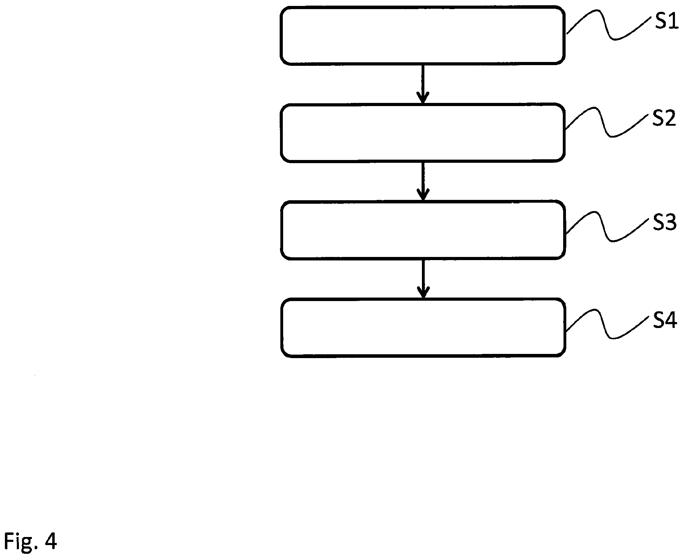

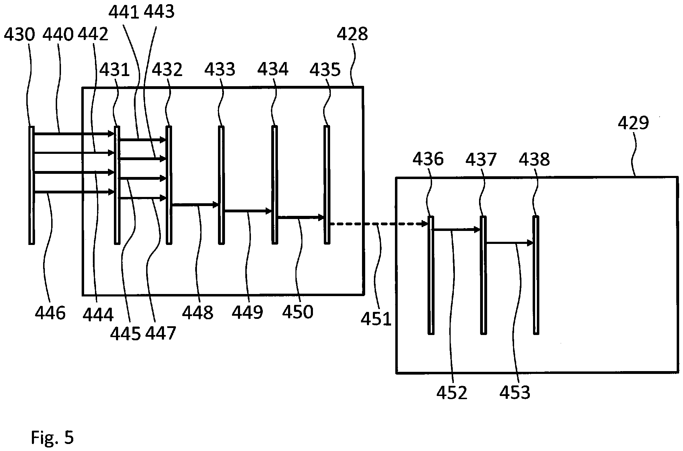

For sake of clarity in the following description of the method-based Figs. 4 and 5 the reference signs used above in the description of apparatus-based Figs. 1 - 3 will be maintained.

Fig. 4 shows a flow diagram of a method for operating a plurality of electronic devices, the electronic devices comprising at least one master electronic device 210 and at least one slave electronic device 100.

The method comprises receiving S1 user input regarding user configurable settings 103, 213 in one of the master electronic devices 210, setting S2 the received user configurable settings 103, 213 according to the user input in the respective master electronic device 210, transmitting S3 from the respective master electronic device 210 the set user configurable settings 103, 213 to the slave electronic devices 100, and operating S4 the slave electronic devices 100 based on the transmitted user configurable settings 103, 213.

In order to establish control groups or groups of electronic devices that are commonly controlled, the method may also comprise transmitting from one of the master electronic devices 210 search requests for slave electronic devices 100 that are capable of receiving user configurable settings 103, 213, and positively answering such received search requests from the slave electronic devices 100.

If multiple groups of devices are to be controlled independently on the same network, the method may also comprise providing from one of the master electronic devices 210 user configurable settings 103, 213 transmitted via the communication interface 211 with a predetermined group ID, and analyzing in the slave electronic devices 100 user configurable settings 103, 213 received via the communication interface 211 for the presence of a predetermined group ID and only storing and operating the slave electronic devices 100 based on the received user configurable settings 103, 213 if the group ID is present in the received user configurable settings 103, 213.

It is understood, that the method according to the present invention may e.g. be used with groups of TV sets 321, 322, 323, 324 and/or audio players or any other electronic devices. Further, it is understood, that the communication between the single electronic devices may e.g. be performed via an Ethernet interface and/or a WIFI interface.

Fig. 5 shows a flow diagram of another embodiment of a method according to the present invention. Fig. 5 shows the method steps in a master TV set 428 and in a slave TV set 429.

The master TV set 428 may be controlled via remote control 430 and comprises a RC command receive software layer 431, a UI dialog framework 432, a TV business logic layer 433, a TV display driver layer 434 and a group synchronization layer 435. The slave TV set 429 comprises a group synchronization layer 436, a TV business logic layer 437 and a TV display driver layer 438.

In a first message 440 a user presses a key on the remote control 430 that initiates the menu. The RC command receive software layer 431 receives the command and provides a message 441 to the UI dialog framework 432 to open the main menu.

In a message 442 the user presses a key on the remote control 430 that initiates the picture menu. The RC command receive software layer 431 receives the command and provides a message 443 to the UI dialog framework 432 to open the picture menu.

In a message 444 the user presses a left or right key on the remote control 430 that changes the color temperature to warm. The RC command receive software layer 431 receives the command and provides a message 445 to the UI dialog framework 432 to select warm color temperature in the picture menu.

In a message 446 the user presses a key on the remote control 430 to save the settings. The RC command receive software layer 431 receives the command and provides a message 447 to the UI dialog framework 432 to accept the new setting. The RC command receive software layer 431 then provides message 448 to the TV business logic layer 433 to set the color temperature. The TV business logic layer 433 then provides message 449 to the TV display driver layer 434 to set the corresponding color temperature. Message 450 is then provided to the group synchronization layer 435 that comprises the color temperature setting. A corresponding message 451 is then sent via a network to the slave TV set 429.

In the slave TV set 429 the group synchronization layer 436 receives the message 451 and provides a respective message 452 to the TV business logic layer 437. The TV business logic layer 437 forwards the message 452 as message 453 to the TV display driver layer 438, where the respective setting is applied.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a slave electronic device 100 comprising a user settings storage memory 102 configured to store user configurable settings 103 for the electronic device, a communication interface 101 configured to receive user configurable settings 103 from a master electronic device 210 and to store the received user configurable settings 103 in the user settings storage memory 102, and a control unit 104 that is coupled to the user settings storage memory 102 and that is configured to operate the slave electronic device 100 based on the user configurable settings 103 stored in the user settings storage memory 102. Further, the present invention comprises a respective master electronic device, a respective control network and a respective method.

### List of reference signs

- 100: slave electronic device
- 101: communication interface
- 102: user settings storage memory
- 103: user configurable settings
- 104: control unit

- 210: master electronic device
- 211: communication interface
- 212: user settings storage memory
- 213: user configurable settings
- 214: control unit
- 215: user interface

- 320: control network
- 321,322,323,324: TV set
- 325: remote control

- 428: master TV
- 429: slave TV
- 430: remote control
- 431: RC command receive software layer
- 432: UI dialog framework
- 433, 437: TV business logic layer
- 434, 438: TV display driver layer
- 435, 436: group synchronization layer
- 440 - 453: messages

- S1, S2, S3, S4: method steps

## Claims

1. Slave electronic device (100) comprising:
a user settings storage memory (102) configured to store user configurable settings (103) for the slave electronic device,
a communication interface (101) configured to receive user configurable settings (103) from a master electronic device (210) and to store the received user configurable settings (103) in the user settings storage memory (102), and
a control unit (104) that is coupled to the user settings storage memory (102) and that is configured to operate the slave electronic device (100) based on the user configurable settings (103) stored in the user settings storage memory (102).

2. Slave electronic device (100) according to claim 1, wherein the control unit (104) is configured to receive via the communication interface (101) search requests for slave electronic devices (100) that are capable of receiving user configurable settings (103) via their communication interface (101) and to positively answer such received search requests.

3. Slave electronic device (100) according to any one of the preceding claims, wherein the control unit (104) is configured to analyze user configurable settings (103) received via the communication interface (101) for the presence of a predetermined group ID and to only store and operate the slave electronic device (100) based on the received user configurable settings (103) if the group ID is present in the received user configurable settings (103).

4. Slave electronic device (100) according to any one of the preceding claims, wherein the slave electronic device (100) comprises a TV set (321, 322, 323, 324) and/or an audio player and wherein the communication interface (101) comprises an Ethernet interface and/or a WIFI interface.

5. Master electronic device (210), comprising
a user settings storage memory (212) configured to store user configurable settings (213) for the master electronic device (210),
a control unit that is coupled to the user settings storage memory (212) and that is configured to operate the master electronic device (210) based on the user configurable settings (213) stored in the user settings storage memory (212),
a communication interface (211) coupled to the control unit (214), and
a user interface (215) coupled to the control unit (214) and configured to receive user input regarding the user configurable settings (213),
wherein the control unit (214) is configured to set the user configurable settings (213) according to the user input and to transmit the set user configurable settings (213) via the communication interface (211) to at least one slave electronic device (100).

6. Master electronic device (210) according to claim 5, wherein the control unit (214) is configured to transmit via the communication interface (211) search requests for slave electronic devices (100) that are capable of receiving user configurable settings (213) via their communication interface (211) and to receive respective answer messages from the respective slave electronic devices (100).

7. Master electronic device (210) according to any one of the preceding claims 5 and 6, wherein the control unit (214) is configured to provide user configurable settings (213) transmitted via the communication interface (211) with a predetermined group ID.

8. Master electronic device (210) according to any one of the preceding claims, wherein the master electronic device (210) comprises a TV set (321, 322, 323, 324) and/or an audio player and wherein the communication interface (211) comprises an Ethernet interface and/or a WIFI interface.

9. Control network (320) comprising
at least one slave electronic device (100) according to any one of claims 1 - 4, and at least one master electronic device (210) according to any one of claims 5-8.

10. Method for operating a plurality of electronic devices, the electronic devices comprising at least one master electronic device (210) and at least one slave electronic device (100), the method comprising:
receiving (S1) user input regarding user configurable settings (103, 213) in one of the master electronic devices (210),
setting (S2) the received user configurable settings (103, 213) according to the user input in the respective master electronic device (210),
transmitting (S3) from the respective master electronic device (210) the set user configurable settings (103, 213) to the slave electronic devices (100), and
operating (S4) the slave electronic devices (100) based on the transmitted user configurable settings (103, 213).

11. Method according to claim 10, comprising
transmitting from one of the master electronic devices (210) search requests for slave electronic devices (100) that are capable of receiving user configurable settings (103, 213), and
positively answering such received search requests from the slave electronic devices (100).

12. Method according to any one of the preceding claims 10 and 11, comprising providing from one of the master electronic devices (210) user configurable settings (103, 213) transmitted via the communication interface (211) with a predetermined group ID, and
analyzing in the slave electronic devices (100) user configurable settings (103, 213) received via the communication interface (211) for the presence of a predetermined group ID and only storing and operating the slave electronic devices (100) based on the received user configurable settings (103, 213) if the group ID is present in the received user configurable settings (103, 213).

13. Method according to any one of the preceding claims 10 to 12, wherein the master electronic devices (210) and/or the slave electronic devices (100) comprise a TV set (321, 322, 323, 324) and/or an audio player and wherein the communication interface (211) comprises an Ethernet interface and/or a WIFI interface.
